# EUROPÄISCHE PATENTSCHRIFT

(11) **EP 1 927 557 B1**
(45) Veröffentlichungstag und Bekanntmachung des Hinweises auf die Patenterteilung: **24.03.2010**
(21) Anmeldenummer: 07023325.9
(22) Anmeldetag: 02.12.2007
(51) Int. Cl.: B65G 1/04

(54) **Lagervorrichtung**
Storage device
Dispositif de stockage

(30) Priorität: 02.12.2006 DE 202006018363 U
(43) Veröffentlichungstag der Anmeldung: 04.06.2008
(73) Patentinhaber: Megamat GmbH Büro- und Lagertechnik, 86476 Neuburg/Kammel (DE)
(72) Erfinder: Preschke, Harald, 89250 Senden (DE)
(74) Vertreter: Fiener, Josef

(56) Entgegenhaltungen:
- EP-A- 1 473 255
- DE-U1- 8 326 738
- DE-U1-202004 011 896

## Beschreibung

Die Erfindung betrifft eine Lagervorrichtung in Form eines mechanischen Schrankes mit einer Vielzahl von Lagergutträgern, die jeweils einen Trägerrahmen und ein Bodenblech aufweisen gemäß dem Oberbegriff des Anspruchs 1.

Eine derartige Lagervorrichtung ist aus der EP 1 473 255 der Anmelderin bekannt. Hierbei ist ein mechanischer Schrank beschrieben, bei dem eine Vielzahl von kassettenartigen Lagergutträgern in zwei seitlichen Regalrahmen ein- bzw. ausschiebbar ist. Zwischen diesen beiden rechten bzw. linken Stapelsäulen ist eine Zubringer-Plattform in Höhenrichtung verfahrbar, so dass einzelne Lagergutträger aus dem Regalrahmen entnommen werden können und zur Auslagerung einer Öffnung zugeführt werden können. Bei dem genannten Stand der Technik wird vorgeschlagen, dass das Bodenblech des jeweiligen Lagergutträgers unter Vorspannung am Trägerrahmen befestigt ist, so dass sich das Bodenblech bei schwerer Beladung nur noch geringfügig durchbiegen kann. Diese Anforderung ist insbesondere deshalb wichtig, da es ansonsten zu Verwindungen des Trägerrahmens kommt, so dass dies bei der Einlagerung in die Regalrahmen zu Problemen führen kann. Eine zusätzliche Rahmenverstärkung verbietet sich jedoch meist, da dies zu viel kostbaren Lagerraum verbrauchen würde. Das Einbringen der Vorspannung z. B. durch Erhitzen des Bodenbleches und/oder Abkühlen des Trägerrahmens ist jedoch relativ schwierig zu kontrollieren. Zudem muss der Trägerrahmen hierzu noch relativ stabil aufgebaut werden, um Verwindungen auszuschließen. Zudem kann das vorgespannte Bodenblech zu Schwingungen neigen, so dass bei genanntem Stand der Technik zwischen dem Randbereich des Bodenblechs und den unteren Schenkeln des

Längsrahmens Dämpfungselemente (z. B. aus Gummi) vorgeschlagen werden.

Demzufolge liegt der Erfindung die Aufgabe zugrunde, eine Lagervorrichtung zu schaffen, deren Lagergutträger eine einfache und kompakte Bauweise bei erhöhter Stabilität bieten.

Diese Aufgabe wird gelöst durch eine Lagervorrichtung gemäß den Merkmalen des Anspruches 1.

Bei dem vorgeschlagenen Bodenblech handelt es sich um ein sandwichartiges Doppelblech aus zwei Blechplatten mit dazwischen eingesetzten Distanzstücken. Dieses Bodenblech ist speziell für Lagergutträger geeignet, die als Blechwanne geformt sind und über stabile Vorderkanten verfügen, wobei der Tragrahmen jedoch relativ "schlank" ausgebildet sein kann. Dabei kann das Bodenblech mit niedrigem Herstellungsaufwand eingebracht werden.

Das Bodenblech wird zunächst im unbelasteten Zustand zusammengefügt, wobei keine Vorspannung eingebracht werden muss, so dass der Tragrahmen relativ filigran aufgebaut sein kann. Bei der Montage liegt das untere Blech (z.B. in einer Schweißvorrichtung) eben auf, wobei auf dieses mehrere Distanzstücke aufgesetzt werden und sich das darüber aufgesetzte obere Bodenblech aufgrund des/der eingesetzten Distanzstücke(-s) im mittleren Bereich um wenige Millimeter nach oben wölbt. An den Längsseiten (vorne und hinten in Auslagerrichtung) kann das untere Blech mit dem oberen Blech verbunden sein, z. B. durch Schweißen, Nieten, Clinchnieten oder andere Verbindungsarten. Unter Last wird das Bodenblech dann nach unten gedrückt, wobei das untere Blech auf Zug und das obere Blech auf Druck belastet wird, wobei dann letzteres nahezu plan ist.

Die Vorteile dieser Sandwich-Bauweise liegen in höheren Lasten bei relativ leichter Bauweise. Damit kann diese leichte Konstruktion mehr Last tragen als andere schwerere Lösungen. Der Aufwand zur Herstellung ist relativ gering. Ein weiterer Vorteil ist der unter Last zunehmend eben werdende Boden, wodurch sich die Durchbiegung des Bodenbleches auch unter hohen Lasten begrenzen lässt. Damit kann die Stabilität der Lagergutträger ohne zusätzliches Bauvolumen erheblich gesteigert werden.

Von Vorteil ist die Anwendung solcher Lagergutträger in Lagervorrichtungen mit einer vertikal beweglichen Zubringer-Plattform, da dort meist eine Vielzahl in den Regalrahmen eingelagert wird. Zudem ergibt sich auch bei langer Lagerzeit von unter Umständen mehreren Jahren keine Zunahme der Durchbiegung des Bodenbleches (Kriecheffekt), da durch das Doppelblech eine optimale Kraftableitung auf den Trägerrahmen und die Regalrahmen der Lagervorrichtung erzielt wird.

Weitere vorteilhafte Ausgestaltungen sind Gegenstand der Unteransprüche.

Nachfolgend wird ein Ausführungsbeispiel der Lagervorrichtung anhand der Zeichnung näher erläutert und beschrieben. Hierbei zeigen:
- Fig. 1: eine Perspektivdarstellung einer Lagervorrichtung;
- Fig. 2: eine Schnittdarstellung der Lagervorrichtung gemäß Fig. 1;
- Fig. 3: eine Darstellung eines Lagergutträgers in Perspektivansicht; und
- Fig. 4: eine Schnittansicht des Bodenblechs gemäß dem Pfeil A-A in Fig. 3.

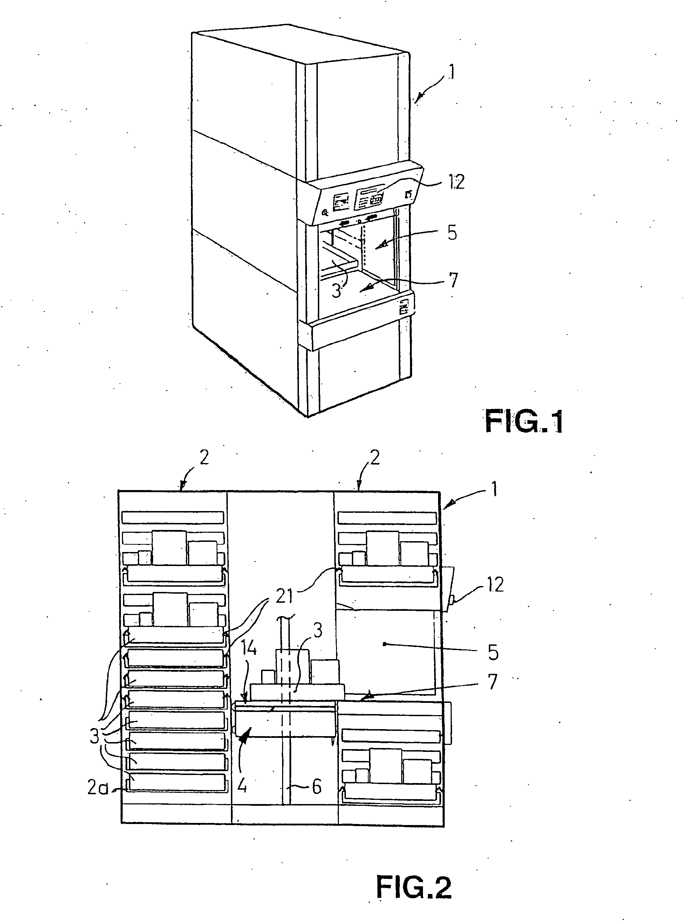

In Fig. 1 ist eine Perspektivdarstellung einer Lagervorrichtung 1 in Form eines mechanischen Schrankes gezeigt, der im wesentlichen aus zwei neben- oder hintereinander angeordneten Regalrahmen 2 besteht (vgl. auch Fig. 2), in denen eine Vielzahl von relativ flachen, kassettenartigen Lagergutträgern 3 auf seitlichen Auflagewinkeln 2a einlagerbar ist. Die Lagergutträger 3 werden hierbei durch eine Zubringer-Plattform 4 von einer Ein-/Auslageröffnung 5 abgeholt und zu dem jeweiligen Fach in dem Regalrahmen 2 transportiert. Die Auslagerung erfolgt dabei in umgekehrter Weise, indem der jeweilige Lagergutträger 3 von entsprechenden Auflagewinkeln 2a an einem vorbestimmten Platz des Regalrahmens 2 gezogen wird, von der Zubringer-Plattform 4 dann auf die Ein-/Auslagerebene 7 der Ein-/Auslageröffnung 5 bewegt wird und dann in diese ausgeschoben wird. Die Steuerung der Einlagerung bzw. Auslagerung erfolgt dabei im allgemeinen mittels einer Antriebsvorrichtung prozessorgesteuert, wobei das Steuerteil beispielsweise hinter einem hier schematisch dargestellten Bedienfeld 12 angebracht ist, mit dem bestimmte Fachplätze in dem Regalrahmen 2 angewählt werden können. In der Ein-/Auslageröffnung 5 kann dabei auch ein Höhensensor vorgesehen sein, der die Höhe des einzulagernden Lagergutträgers 3 erfasst und diesem dann ein entsprechender Platz im Regalrahmen 2 zugewiesen wird. Hierdurch wird die Lagerplatznutzung in der Lagervorrichtung 1 erhöht.

Zur Ein-/Auslagerung der jeweiligen Lagergutträger 3 sind an der Oberseite der Zubringer-Plattform 4 z. B. Kettenantriebe 14 vorgesehen, mit denen die jeweiligen Lagergutträger 3 aus der Einlageröffnung 5 übernommen werden können bzw. auf diese ausgeschoben werden können. Um hierbei mit dem jeweiligen Lagergutträger 3 in Eingriff gehen zu können, ist beispielsweise ein vorderes bzw. rückseitiges Eingriffsprofil 21 (nur an einigen Lagergutträgern 3 durch je einen Haken angedeutet) für die Kettenantriebe 14 vorgesehen, wie dies in Fig. 2 als Schnittdarstellung der Lagereinrichtung 1 gemäß Fig. 1 gezeigt ist. Hierbei sind insbesondere die Anordnung der beiden Regalrahmen 2 und die Zubringer-Plattform 4 ersichtlich, mit der nach dem Einschieben eines (hier mit ggf. relativ schweren Maschinenteilen beladenen) Lagergutträgers 3 von Hand, mittels Roboter oder eines sonstigen Bediengerätes, die Lagergutträger 3 an den zugewiesenen Lagerplatz im Regalrahmen 2 bewegbar sind. Dies erfolgt durch Höhenbewegung der Zubringer-Plattform 4 z. B. mittels eines geschlossenen Seilstranges. Die Plattform 4 wird dabei in Höhenrichtung an einer Führungsschiene 6 geführt, wobei Regalhöhen von drei bis zwanzig Metern üblich sind, so dass z. B. mehrere hundert Lagergutträger 3 (auch als Tablar bezeichnet) in einer solchen Lagervorrichtung eingelagert sein können.

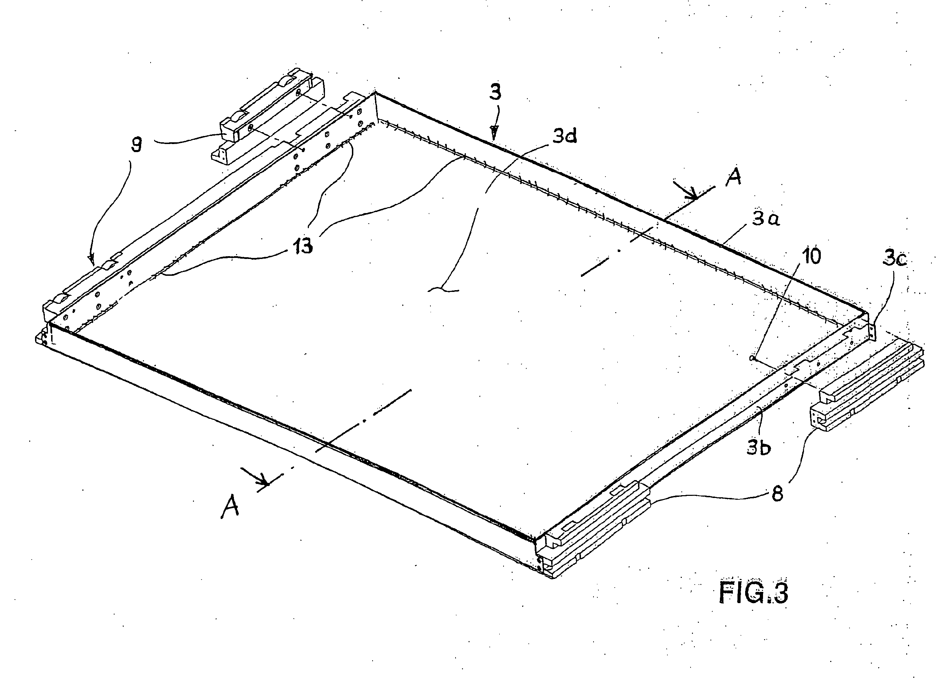

In Fig. 3 ist einer der tablarartigen Lagergutträger 3 vergrößert gezeigt. An dessen Seitenflächen, die in die Auflagewinkel 2a der Regalrahmen 2 eingreifen oder sich darauf abstützen, sind hier vier Gleit- oder Rollenführungen 8 bzw. 9 austauschbar befestigt, beispielsweise mittels Schrauben 10. Die Gleitführungen 8 oder Rollenführungen 9 sind entlang der Seitenfläche so angeordnet, dass sich diese Führungsblöcke nach oben an einer Abkantung des Seitenrahmens 3b des Lagergutträgers 3 abstützen. Zudem liegen diese jeweils an einem Winkel-Anschlag 3c an, so dass sich eine exakte Positionierung zum Trägerrahmen hin ergibt, der durch die erwähnten Seitenrahmen 3b und Längsrahmen 3a gebildet ist. Am Längsrahmen 3a kann zur Ein-/Auslagerung das oben erwähnte Eingriffsprofil 21 angebracht sein oder durch Biegebearbeitung bei der Herstellung eingearbeitet sein. An diesem Trägerrahmen 3a/3b ist ein Bodenblech 3d befestigt, insbesondere verschweißt, wie dies durch die Schweißnähte 13 angedeutet ist. Dadurch ergibt sich eine stabile Abstützung des Bodenbleches 3d des Lagergutträgers 3 sowie eine optimale Krafteinleitung in den Rahmen, so dass auch bei hohen Kräften, beispielsweise bei schweren Lagergütern, eine sichere Abstützung gegeben ist.

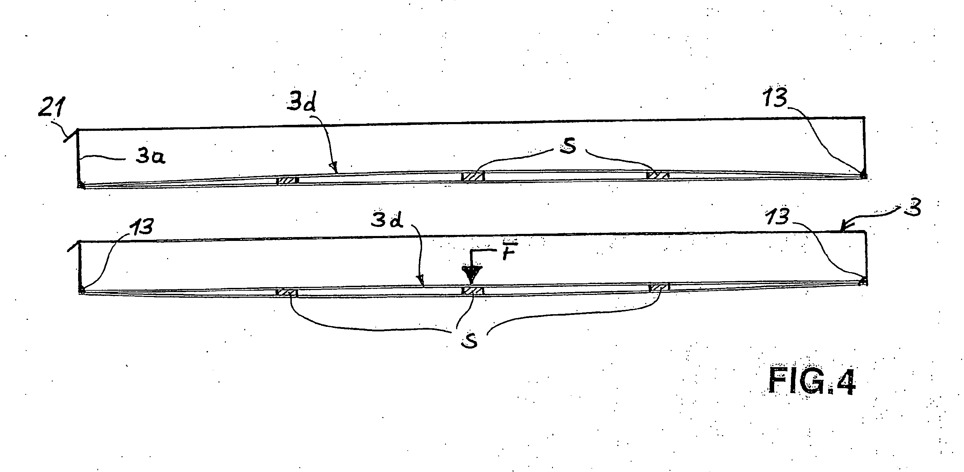

In Fig. 4 sind in zwei Schnittansichten gemäß dem Pfeil A-A in Fig. 3 der unbelastete und der belastete Zustand des Bodenblechs 3d dargestellt, um dessen sandwichartigen Aufbau genauer zu zeigen. Zudem ergibt sich daraus die Anordnung der Distanzstücke S zwischen den übereinander liegenden Blechplatten des Doppelblechs bzw. Bodenblechs 3d. Die Distanzstücke S sind hierbei etwa in gleichen Abständen entlang der Breiten- bzw. Tiefenrichtung des Lagergutträgers 3 eingesetzt, und bevorzugt im Doppelblech fixiert, z.B. verklebt.

In der oberen Hälfte von Fig. 4 ist der unbelastete Zustand des Lagergutträgers 3 gezeigt, wobei das obere Blech aufgrund der Distanzstücke S nach oben gewölbt ist, während das untere Blech praktisch plan ist. Im belasteten Zustand (untere Hälfte von Fig. 4) wird das obere Blech bei steigender Belastung aufgrund zunehmender Druckspannung nahezu eben, während das untere Blech des Bodenblechs 3d mit zunehmender Zugspannung nach unten durchwölbt. Das Bodenblech 3d ist mit den Seiten- und/oder Längsrahmen des Trägerrahmens 3a, 3b durch die Schweißnähte 13 verbunden, so dass sich der gewünschte Aufbau des Bodenblechs 3d ergibt, nämlich im unbelasteten Zustand des Bodenblechs 3d eine Wölbung des mittleren Bereichs nach oben, so dass schwere Lasten stabiler abgestützt werden können. Das Maß dieser Wölbung kann durch die Höhe oder Anzahl der "padartigen" Distanzstücke S einfach eingestellt werden, wobei diese auch leistenartig ausgebildet sein können, zb. In Form flacher Kunststoffleisten im Doppelblech des Bodenblechs 3d. Somit wird die Tragfähigkeit ohne platzraubende Rahmenverstärkungen wesentlich erhöht.

## Patentansprüche

1. Lagervorrichtung in Form eines mechanischen Schrankes mit einer Vielzahl von Lagergutträgern (3), die jeweils einen Trägerrahmen (3a, 3b) und ein Bodenblech (3d) aufweisen, wobei das Bodenblech (3d) des Lagergutträgers (3) an dem Trägerrahmen (3a, 3b) befestigt ist,
**dadurch gekennzeichnet, dass**
das Bodenblech (3d) doppelwandig aus zwei übereinanderliegenden Blechplatten gebildet ist, zwischen denen wenigstens ein Distanzstück (S) im mittleren Bereich des Bodenblechs (3d) eingesetzt ist.

2. Lagervorrichtung nach Anspruch 1, **dadurch gekennzeichnet, dass** das Bodenblech (3d) mittels Schweißnähten (13) am Trägerrahmen (3a, 3b) verschweißt ist oder mit diesem vernietet ist.

3. Lagervorrichtung nach Anspruch 2, **dadurch gekennzeichnet, dass** die Schweißnähte (13) entlang dem vorderen und hinteren Rahmen (3a) des Trägerrahmens (3a, 3b) verlaufen.

4. Lagervorrichtung nach einem der Ansprüche 1 bis 3, **dadurch gekennzeichnet, dass** jeweils zwei Gleit- oder Rollenführungen (8, 9) seitlich am Lagergutträger (3) angeordnet sind.

5. Lagervorrichtung nach einem der Ansprüche 1 bis 4, **dadurch gekennzeichnet, dass** das Distanzstück (S) als Leiste ausgebildet ist.

6. Lagervorrichtung nach einem der Ansprüche 1 bis 5, **dadurch gekennzeichnet, dass** mehrere Distanzstücke (S) voneinander beabstandet angeordnet sind, insbesondere drei bis fünf Distanzstücke (S) in gleichmäßiger Verteilung entlang der Breiten- oder Tiefenerstreckung des Bodenblechs (3d).

7. Lagervorrichtung nach einem der Ansprüche 1 bis 6, **dadurch gekennzeichnet, dass** die Distanzstücke (S) im Bodenblech (3d) fixiert sind, beispielsweise verklebt oder punktgeschweißt sind.

## Claims

1. Storage apparatus in form of a mechanical cabinet with a multiplicity of storage carriers (3), which include a carrier framework (3a, 3b) and a floor sheet (3d) each, wherein the floor sheet (3d) of the storage carrier (3) is fastened to the carrier framework (3a, 3b),
**characterized in that**
the floor sheet (3d) is formed as double-wall consisting of two sheets lying above each other and between which at least one spacer (S) is inserted in the middle region of the floor sheet (3d).

2. Storage apparatus according to claim 1, **characterized in that** the floor sheet (3d) is welded by means of welding seams (13) at the carrier framework (3a, 3b) or riveted thereto.

3. Storage apparatus according to claim 2, **characterized in that** the welding seams (13) run along the front and the rear frame (3a) of the carrier framework (3a, 3b).

4. Storage apparatus according to one of claims 1 to 3, **characterized in that** two sliding or roller aprons (8, 9) are arranged laterally at the storage carrier (3).

5. Storage apparatus according to one of claims 1 to 4, **characterized in that** the spacer (S) is formed as a rail.

6. Storage apparatus according to one of claims 1 to 5, **characterized in that** multiple spacers (S) are distanced from each other, in particular three to five spacers (S) are constantly located along the width or deep extension of the floor sheet (3d).

7. Storage apparatus according to one of claims 1 to 6, **characterized in that** spacers (S) are fixed at the floor sheet (3d), for instance are adhered or spot-welded.

## Revendications

1. Dispositif de stockage sous la forme d'une armoire mécanique avec une pluralité de supports (3) de produits stockés qui présentent chacun un cadre de support (3a, 3b) et une tôle de fond (3d), sachant que la tôle de fond (3d) du support (3) de produits stockés est fixée sur le cadre de support (3 a, 3b),
**caractérisé en ce que** la tôle (3d) est réalisée à double paroi en étant constituée de deux plaques de tôle superposées, entre lesquelles au moins une entretoise (S) est insérée dans la région centrale de la tôle de fond (3d).

2. Dispositif de stockage selon la revendication 1, **caractérisé en ce que** la tôle de fond (3d) est soudée sur le cadre de support (3a, 3b) au moyen de soudures (13), ou est rivetée avec ce dernier.

3. Dispositif de stockage selon la revendication 2, **caractérisé en ce que** les soudures (13) s'étendent le long du cadre avant et arrière (3a) du cadre de support (3a, 3b).

4. Dispositif de stockage selon l'une des revendications 1 à 3, **caractérisé en ce que** deux guidages à glissement ou à rouleaux (8, 9) sont respectivement disposés sur les côtés du support (3) de produits stockés.

5. Dispositif de stockage selon l'une des revendications 1 à 4, **caractérisé en ce que** l'entretoise (S) est réalisée sous forme de barrette.

6. Dispositif de stockage selon l'une des revendications 1 à 5, **caractérisé en ce que** plusieurs entretoises (S) sont disposées à distance entre elles, en particulier trois à cinq entretoises (S) uniformément réparties le long de la largeur ou de la profondeur de la tôle de fond (3d).

7. Dispositif de stockage selon l'une des revendications 1 à 6, **caractérisé en ce que** les entretoises (S) sont fixées en position sur la tôle de fond (3d), par exemple par collage ou par soudage par points.
